Europäisches Patentamt

European Patent Office

Office européen des brevets

(19)

(11) Veröffentlichungsnummer: **0 265 670 B1**

# (12) EUROPÄISCHE PATENTSCHRIFT

(45) Veröffentlichungstag der Patentschrift: **14.08.91**

(51) Int. Cl.⁵: **B60G 17/00**

(21) Anmeldenummer: 87113897.0

(22) Anmeldetag: 23.09.87

(54) **Verfahren zur Dämpferkraftverstellung von Kraftfahrzeugen.**

(30) Priorität: 27.09.86 DE 3632919

(43) Veröffentlichungstag der Anmeldung:
04.05.88 Patentblatt 88/18

(45) Bekanntmachung des Hinweises auf die
Patenterteilung:
14.08.91 Patentblatt 91/33

(84) Benannte Vertragsstaaten:
**DE ES FR GB IT SE**

(56) Entgegenhaltungen:
**EP-A- 0 027 869**
**EP-A- 0 151 421**
**DE-A- 3 633 159**
**DE-C- 3 518 503**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Dietrich, Christian**
**An der Grundbreite**
**W-8031 Wessling(DE)**
Erfinder: **Hennecke, Dieter**
**Raiffeisenstrasse 6**
**W-8069 Reichertshausen(DE)**
Erfinder: **Lösch, Simon**
**Zieglerweg 10**
**W-8059 Wartenburg(DE)**
Erfinder: **Pfeil, Dirk**
**Lasallestrasse 75**
**W-8000 München 50(DE)**

(74) Vertreter: **Bullwein, Fritz**
**Bayerische Motoren Werke Aktiengesellschaft Postfach 40 02 40 Petuelring 130 AJ-33**
**W-8000 München 40(DE)**

EP 0 265 670 B1

## Beschreibung

Die Erfindung bezieht sich auf ein Verfahren zur Dämpfkraftverstellung von Kraftfahrzeugen in Abhängigkeit von Ausgangssignalen eines am Fahrzeugaufbau angeordneten Gebers, die aufbereitet werden und bei Über-/Unterschreiten eines vorgegebenen Schwellwertes ein Signal zum Ändern der Dämpfkraft auslösen.

Bei einem bekannten Verfahren dieser Art EP-A-0 151 421 werden die Ausgangssignale des als Höhen-bzw. Beschleunigungsgebers ausgebildeten Gebers einer Frequenzanalyse unterzogen. Eine Dämpfkraftverstellung wird dann vorgenommen, wenn der bevorzugt niederfrequente, für die Schwingungen des Fahrzeugaufbaus repräsentative Anteil dieses Ausgangssignals einen vorgegebenen Schwellwert übersteigt.

Bei Verwendung eines Beschleunigungsgebers ist dieser zwischen einer Lagerplatte für ein Dämpfungs- und Federungsteil und dem Ende des Dämpfungsteil angeordnet, wobei die Tragplatte ihrerseits elastisch gegenüber dem Fahrzeugaufbau gelagert ist. Bei einer derartigen Anordnung des Beschleunigungsgebers empfängt dieser bevorzugt den höherfrequenten, für die Schwingungen des Fahrzeugrads typischen Anteil der auftretenden Schwingungsfrequenzen, während der niederfrequente Anteil dann ein wesentlich geringeres Ausmaß als der höherfrequente Anteil besitzt. Hinzu kommt die Beeinflussung des Ausgangssignals des Beschleunigungsgebers durch die Wechselwirkung zwischen dem Federungs- und dem Dämpfungsteil mit dem Beschleunigungsgeber selbst. Die Verstellung der Dämpfkraft wird ihrerseits in Abhängigkeit von dem hinsichtlich seiner Amplitude gemessenen Anteil des niederfrequenten Schwingungsanteils vorgenommen.

Bei dem bekannten Verfahren ist eine reproduzierbare Dämpferverstellung nicht möglich, da einerseits durch die Anordnung des Beschleunigungsgebers in der beschriebenen Weise der niederfrequente Schwingungsanteil relativ gering und nur schwer bestimmbar ist. Durch die Bestimmung der Amplitude dieses Anteils ist eine schnellere Reaktion, wie dies insbesondere beim Auftreten von Einzelhindernissen erforderlich ist, nicht ohne weiteres möglich.

Der Erfindung liegt die Aufgabe zugrunde, ein Verfahren der eingangs genannten Art zu schaffen, das auf einfache und reproduzierbare Weise eine Aussage über das Auftreten von Einzelhindernissen und so eine schnelle Änderung der Feder-bzw. Dämpfkraft eines oder mehrerer Räder bzw. einer oder mehrerer Achsen des Kraftfahrzeugs ermöglicht.

Die Erfindung löst diese Aufgabe durch die kennzeichnenden Merkmale des Patentanspruchs 1.

Durch die auf die Zeit bezogene Berücksichtigung der Änderungen des Ausgangssignals wird eine schnelle Reaktion insbesondere bei Einzelhindernissen möglich. Bei Wahl der beiden Meßzeiten in der beschriebenen Form läßt sich der meßtechnische Aufwand gering halten. Schließlich ergibt die Berücksichtigung des Gebersignals in der beschriebenen Form die Möglichkeit, ohne aufwendige Frequenzanalyse lediglich den niederfrequenten Anteil ohne wesentliche Beeinträchtigung durch den hochfrequenten Anteil aufzunehmen und entsprechend auszuwerten.

Es ist möglich, mit einem vorgegebenen Schwellwert zu arbeiten. Dies stellt jedoch in jedem Fall einen Kompromiß dar, da wesentliche Einflußgrößen auf das Ausgangssginal des Beschleunigungsgebers unberücksichtigt bleiben. Es handelt sich dabei um die Einflüsse durch die Geschwindigkeit bzw. Beladung des Fahrzeugs bzw. bei hydraulischen Dämpfern die Dämpferöltemperatur. Durch die Berücksichtigung der Beladung bzw. der Geschwindigkeit wird dem Umstand Rechnung getragen, daß bei höheren Beladungen bzw. höheren Geschwindigkeiten ein schnelleres Ansprechen erforderlich ist. Dies wird durch entsprechende Verringerung des Schwellwerts erreicht. Die Berücksichtigung der Dämpferöltemperatur ermöglicht es, die durch die unterschiedliche temperaturabhängige Viskosität des in Dämpfungselementen verwendeten Öles hervorgehobene unterschiedliche Dämpfkrafteinstellung einzubeziehen. Dies führt dazu, daß bei tieferen Öltemperaturen der Schwellwert relativ hoch gelegt werden kann, da in diesem Fall ohnehin eine härtere Dämpfkrafteinstellung gegeben ist.

Die Bestimmung der Mittelwerte kann unterschiedlich erfolgen. Eine Möglichkeit besteht in der Mittelung der Ausgangssignale der Geber über Meßzeiten, die größer bzw. kleiner als die Eigenzeit des Fahrzeugaufbaus ist. Eine andere Möglichkeit sieht vor, den jeweils bereits vorhandenen Mittelwert mit Hilfe des aktuellen Wertes zu aktualisieren. Hierzu wird der aktuelle Wert gewichtet. Für die beiden Mittelwerte sind dabei unterschiedliche Wichtungsfaktoren erforderlich. Das Verhältnis der beiden Wichtungsfaktoren für die Mittelwerte ist reziprok zum Verhältnis der maßgeblichen Meßzeiten für das oben angegebene Mittelungsverfahren.

In der Zeichnung ist anhand eines Diagramms die Wirkungsweise der Erfindung erläutert.

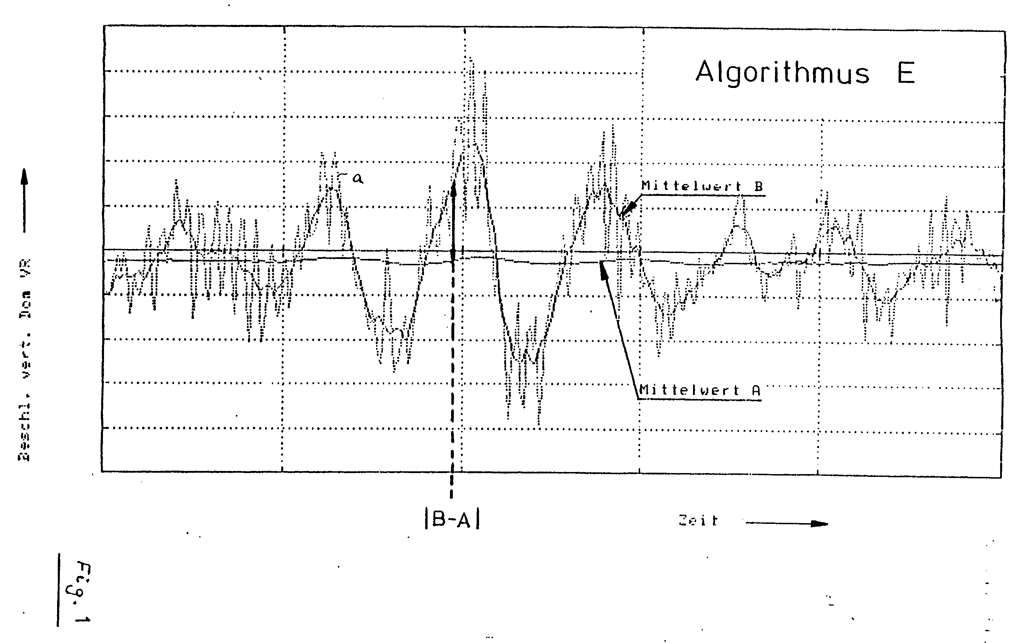

Das Diagramm von Fig. 1 zeigt das Ausgangssignal a eines Beschleunigungsgebers, der mit einem fahrzeugaufbaufestem Gehäuseteil verbunden ist. Dieses Ausgangssignal läßt deutlich einen niederfrequenten Anteil A und einen hochfrequenten Anteil (A-a) erkennen. Der hochfrequente Anteil ist im wesentlichen verursacht durch die Schwingungen des Fahrzeugrades, während der niederfrequente Anteil durch die Schwingungen des Fahrzeugaufbaus verursacht ist. Wird nun einerseits über eine Meßzeit, die wesentlich größer als die für die Schwingungen des Fahrzeugaufbaus maßgebliche Eigenzeit (= reziproke Resonanzfrequenz) ist, ein Mittelwert über das Ausgangssignal des Beschleunigungsgebers bestimmt, so ergibt sich dadurch der in etwa waagrecht verlaufende Signalverlauf B. Wird hierzu für eine Meßzeit, die wesentlich kleiner als diese Eigenzeit ist, der (gleitende) Mittelwert über das Ausgangssignal des Beschleunigungsgebers bestimmt, so ergibt sich dadurch die mit A bezeichnete Kurve. Der Betrag der beiden Werte B minus A ist ein Maß für den niederfrequenten Schwingungsanteil. Überschreitet diese Differenz einen vorgegebenen Schwellwert, so wird die Dämpfkraft eines oder mehrerer nicht dargestellter Dämpfungselemente und/oder die Federkraft einer entsprechenden Anzahl von Federelementen in Richtung "hart" verstellt.

Diese Differenz B minus A liegt betragsmäßig bereits bei einem einfachen Hindernis, bei dem eine merkliche Schwingung des Fahrzeugaufbaus angeregt wird, über dem Schwellwert und hat eine entsprechende Reaktion der Dämpfungs- bzw. Federungsteile zur Folge. Damit ist es möglich, grundsätzlich mit einer weichen Feder- bzw. Dämpferabstimmung zu fahren, da eine wirkungsvolle Reaktion auf Einzelhindernisse möglich ist und damit unerwünschte Auswirkungen auf die Fahrsicherheit oder gar Schäden am Fahrzeugaufbau verhindert werden können.

Schaltungstechnisch ist die Erfindung in der Weise realisierbar, daß die über entsprechende Indikatoren gebildeten Mittelwerte A und B einem Differenzverstärker zugeführt werden, dessen Ausgangssignal mit einem Schwellwert einem weiteren Differenzverstärker zugeführt wird, der andererseits mit dem Schwellwert beaufschlagt wird. Das Ausgangssignal dieses Differenzverstärkers dient zur Einstellung der Dämpf- bzw. Federungsteile.

Anstelle des Mittelungsverfahrens über unterschiedliche Meßzeiten für die Mittelwerte A und B kann auch eine entprechende Mittelung mit Hilfe eines Verfahrens durchgeführt werden, bei dem der aktuelle Meßwert x mit einem Wichtungsfaktor versehen wird und zu einer Aktualisierung des Mittelwertes führt. Dies kann beispielsweise mit Hilfe des u.a.Algorithmus erfolgen:

$$\bar{x}_n = \frac{\bar{x}_a + F \cdot x}{1 + F}$$

Dabei ist

$\bar{x}_n$ der sich ergebende neue Mittelwert (A bzw. B)
$\bar{x}_a$ der bisherige Mittelwert und
F ein Wichtungsfaktor.

Der Wichtungsfaktor F ist für die beiden Mittelwerte A und B unterschiedlich. Das Verhältnis der beiden Wichtungsfaktoren für die Mittelwerte A und B ist reziprok zum Verhältnis der Meßzeiten beim obigen Verfahren. D.h. der Wichtungsfaktor für das Ausgangssignal des Beschleunigungs-Gebers ist für die Berechnung des Mittelwertes B wesentlich größer als der Wichtungsfaktor für die Berechnung des Mittelwertes A.

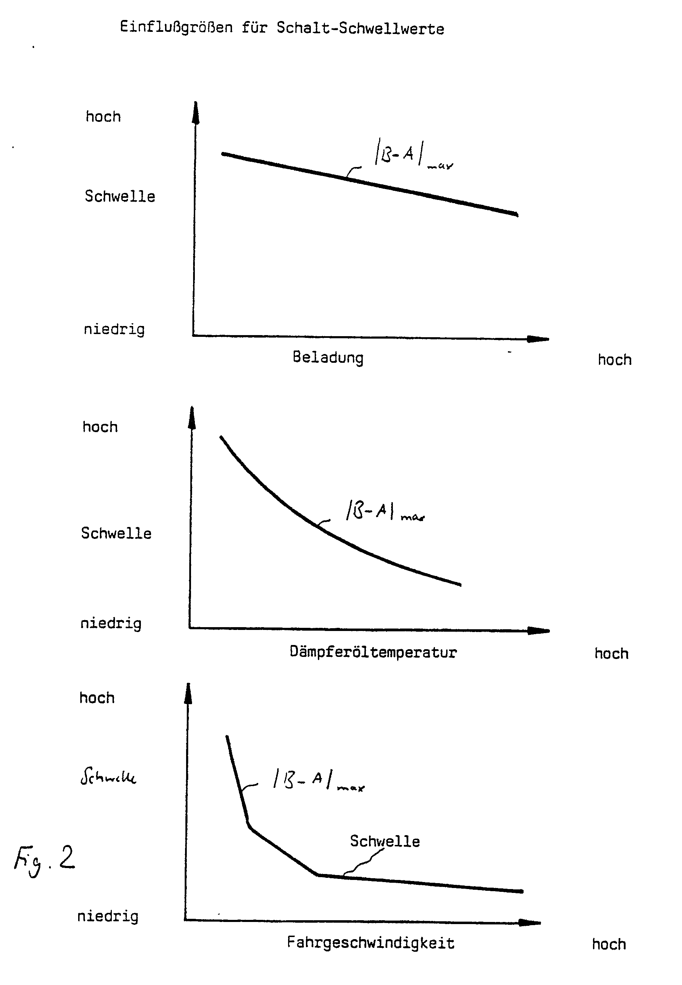

Der Schwellwert $|A-B|_{max}$, mit dem die Differenz $|A-B|$ verglichen wird, kann abhängig von der Beladung, der Dämpferöltemperatur und der Fahrgeschwindigkeit sein. Diese Abhängigkeit ist tendenziell in den drei Diagrammen von Fig. 2 gezeigt. Daraus ergibt sich, daß bei höherer Beladung, höherer Dämpferöltemperatur bzw. höherer Fahrgeschwindigkeit eine niedrigere Schwelle maßgeblich ist, d.h. in diesen Fällen früher auf eine härtere Dämpfer- bzw. Federeinstellung umgeschaltet wird.

## Patentansprüche

1. Verfahren zur Dämpfkraftverstellung von Kraftfahrzeugen in Abhängigkeit von Ausgangssignalen eines am Fahrzeugaufbau angeordneten Gebers, die aufbereitet werden und bei Über-/Unterschreiten eines vorgegebenen Schwellwertes ein Signal zum Ändern der Dämpfkraft auslösen, dadurch gekennzeichnet, daß aus den Ausgangssignalen eines die Beschleunigungen des Fahrzeugaufbaus unmittelbar aufnehmenden Gebers gebildete Mittelwerte (A,B) voneinander subtrahiert werden und die betragsmäßige Differenz ($|B-A|$) mit einem Schwellwert verglichen wird und daß die Mittelwerte (A,B) einer ersten Meßzeit, die größer (Mittelwert A) bzw. einer zweiten Meßzeit, die kleiner (Mittelwert B) als die Eigenzeit (reziproke Eigenfrequenz) des Fahrzeugaufbaus ist, entsprechen.

2. Verfahren nach Anspruch 1, dadurch gekennzeichnet, daß der Schwellwert abhängig von der Kraftfahrzeug-Geschwindigkeit und/oder der Beladung des Kraftfahrzeugs und/oder bei hydraulischen Dämpfern der Dämpferöltemperatur ist.

3. Verfahren nach Anspruch 1 oder 2, dadurch gekennzeichnet, daß die Mittelwerte (A,B) durch Mittelung über Meßzeiten gewonnen sind, die größer (Mittelwert A) bzw. kleiner (Mittelwert B) als die Eigenzeit des Fahrzeugaufbaus sind.

4. Verfahren nach Anspruch 1 oder 2, dadurch gekennzeichnet, daß die Mittelwerte (A,B) mit Hilfe von gewichteten aktuellen Ausgangssignalen des Gebers bestimmt sind, wobei das Verhältnis der Wichtungsfaktoren für die Mittelwerte (A,B) reziprok zum Verhältnis der maßgeblichen Meßzeiten ist.

## Claims

1. A process for regulating the damping of motor vehicles as a function of output signals of a transmitter arranged on the vehicle body, which are prepared and on exceeding/falling below a given threshold value emit a signal to alter the damping, characterised in that mean values (A,B) formed from the output signals of a transmitter directly recording the accelerations of the vehicle body are subtracted one from the other and the difference ( |B-A| ) in terms of magnitude is compared with a threshold value and that the mean values (A,B) correspond to a first measurement time, which is greater (mean value A) or, respectively, to a second measurement time, which is smaller (mean value B) than the proper time (reciprocal proper frequency) of the body of the vehicle.

2. A process according to Claim 1, characterised in that the threshold value is dependent on the speed of the motor vehicle and/or on the loading of the motor vehicle and/or, in the case of hydraulic dampers, on the damper oil temperature.

3. A process according to Claim 1 or 2, characterised in that the mean values (A,B) are obtained through averaging cver measurement times which are greater (mean value A) or, respectively, smaller (mean value B) than the proper time of the vehicle body.

4. A process according to Claim 1 or 2, characterised in that the mean values (A,B) are determined with the aid of weighted actual output signals of the transmitter, in which the ratio of the weighting factors for the mean values (A,B) is reciprocal to the ratio of the determining measurement times.

## Revendications

1. Procédé pour le réglage de l'amortissement de véhicules à moteur en fonction de signaux de sortie d'un détecteur disposé sur le châssis du véhicule, qui sont préparés et lors du dépassement en-dessus ou en-dessous d'une valeur de consigne prédéterminée, émettent un signal pour modifier le réglage de l'amortissement, caractérisé en ce que les valeurs moyennes (A, B) formées à partir des signaux de sortie d'un détecteur recevant directement les accélérations du châssis du véhicule, sont soustraites l'une de l'autre et que la différence ( |A-B| ) est comparée à une valeur de consigne et que les valeurs moyennes (A, B) correspondent, la plus grande (valeur moyenne A) à un premier temps de mesure, la plus petite (valeur moyenne B) à un deuxième temps de mesure, que le temps propre (fréquence propre réciproque) du châssis du véhicule.

2. Procédé selon la revendication 1, caractérisé en ce que la valeur de consigne est fonction de la vitesse du véhicule et/ou de la charge du véhicule, et/ou de la température de l'huile des amortisseurs hydrauliques du véhicule.

3. Procédé selon la revendication 1 ou 2, caractérisé en ce que ces valeurs moyennes (A, B) sont obtenues en faisant la moyenne des temps de mesure, qui sont plus grands (valeur moyenne A) ou plus petits (valeur moyenne B) que le temps propre du châssis du véhicule.

4. Procédé selon la revendication 1 ou 2, caractérisé en ce que les valeurs moyennes (A ou B) sont déterminées à l'aide de signaux de sortie actuels pondérés du détecteur, le rapport des facteurs de pondération étant réciproque pour les valeurs moyennes (A, B) du rapport des temps de mesure déterminants.

EP 0 265 670 B1

Algorithmus E

a

Mittelwert B

Mittelwert A

|B-A|

Zeit

Beschl. verk. Jom x/s

Fig. 1

Einflußgrößen für Schalt-Schwellwerte

hoch

$|B-A|_{max}$

Schwelle

niedrig

Beladung                                    hoch

hoch

Schwelle

$|B-A|_{max}$

niedrig

Dämpferöltemperatur                         hoch

hoch

Schwelle

$|B-A|_{max}$

Schwelle

Fig. 2

niedrig

Fahrgeschwindigkeit                         hoch